# EUROPEAN PATENT SPECIFICATION

(11) **EP 3 852 404 B1**
(45) Date of publication and mention of the grant of the patent: **05.10.2022**
(21) Application number: 20151658.0
(22) Date of filing: 14.01.2020
(51) Int. Cl.: H04W 28/22, H04W 4/40

(54) **EFFICIENT USE OF A RAN FOR SAFELY OPERATING A VEHICLE**
EFFIZIENTE VERWENDUNG EINES FUNKZUGANGSNETZES (RAN) ZUM SICHEREN BETRIEB EINES FAHRZEUGS
UTILISATION EFFICACE D'UN RAN POUR FAIRE FONCTIONNER UN VÉHICULE EN TOUTE SÉCURITÉ

(43) Date of publication of application: 21.07.2021
(73) Proprietor: Deutsche Telekom AG, 53113 Bonn (DE)
(72) Inventor: SCHNIEDERS, Dominik, 52078 Aachen (DE)
(74) Representative: Raible Deissler Lehmann Patentanwälte PartG mbB

(56) References cited:
- WO-A1-2019/156935
- US-A1- 2017 111 827
- US-A1- 2018 317 067

## Description

The invention relates to a method for operating a vehicle, wherein a vehicle is operated using a wireless connection to a radio access network. The invention further relates to a computer program product for operating a vehicle.

Many vehicles already have radio interface units for connecting to a radio access network (RAN) over the air (OTA), i.e. via a wireless connection. The number of vehicles having a radio interface is increasing and is expected to increase even faster in the future.

At the same time, the vehicles are increasingly provided with autonomous driving capabilities which at present are provided by advanced driving assistance systems (ADAS) and only cover particular operational contexts, i.e. driving situations, of the vehicles (levels 2 and 3). However, fully autonomous vehicles (level 4) are expected to be available in the future which are operated basically without any intervention of a driver.

Advanced autonomous driving functionalities require the vehicles to exchange a large amount of data with each other and/or with one or more stationary servers via the radio access network essentially in real time. Accordingly, a sufficiently low latency and/or a sufficiently high data rate of the wireless connection has to be ensured in order to support the advanced autonomous driving functionalities.

A list of items connected by "and/or" is to be understood as "at least one of" the listed items throughout the application.

US 2017/0111827 A1 discloses a method for remotely operating a vehicle. A network node is wirelessly connected to both the vehicle and a controller node and centrally determines and allocates a maximum latency to each wireless connection.

WO 2019/156935 A1 discloses a method for constantly providing a minimum service quality for a user device being arranged in a vehicle moving on a route of travel and streaming a multimedia content, the route of travel extending through a plurality of radio cells of a radio access network.

However, on the one hand actual radio access networks do not support wireless connections ensuring at least temporarily a maximum latency and/or a minimum data rate, i.e. bandwidth. On the other hand, a radio capacity of an access node of the radio access network may be easily exceeded due to a large plurality of vehicles or other user equipments (UE) being located within a range of the access node and being connected to the access node or due to bad radio conditions caused by environmental factors within the range like tunnels, buildings, plants, mountains providing a radio shadow or a radio absorption, weather conditions and the like or caused by a marginal position of the vehicle with respect to the range.

Hence, it would be desirable to protect the vehicles from any communication delay or data bottleneck caused by a wireless connection to a radio access network.

The invention is specified by an independent method claim 1 and by a corresponding independent computer program product claim 12. Further embodiments are defined by the dependent claims.

One aspect of the invention is a method according to claim 1 for operating a vehicle, wherein a vehicle is operated using a wireless connection to a radio access network. In other words, the vehicle exchanges data with the radio access network over the air with the data exchange enabling a proper operation of the vehicle. The proper operation of the vehicle particularly includes an at least partially autonomous driving functionality. The vehicle comprises a car, a lorry, a motorbike, a bicycle, a scooter, a pedestrian carrying a smart phone, an aircraft, a drone and the like, i.e. any mobile user equipment (UE) device which may be involved in a traffic situation.

The requested minimum data rate is determined by the vehicle to be sufficiently high for a safe operation of the vehicle in the operational context of the vehicle, i.e. a driving situation of the vehicle. The requested maximum latency is determined by the vehicle to be sufficiently low for the safe operation of the vehicle in the operational context of the vehicle.

Due to the corresponding allocations of the radio access network the vehicle is effectively protected from intolerable communication delays or data bottlenecks. At the same time, the vehicle does not occupy unnecessary radio resources of the radio access network. A load of the radio access network is not unnecessarily high as radio resources are managed efficiently.

As a result, the vehicle may exchange data with an edge data center (Mobile Edge Computing, MEC) very efficiently, i.e. both with a sufficient data rate and a tolerable latency, particularly high quality data in real time if needed and low quality data with a delay if acceptable. In other words, the vehicle may wirelessly send first data to the edge data center and wirelessly receive second data from the edge data center. Correspondingly, the edge data center may wirelessly receive the first data from the vehicle, generate the second data and wirelessly send the second data to the vehicle. Generating the second data may comprise transforming the first data and combining the transformed first data and external data, i.e. enriching the first data.

In a preferred embodiment a predetermined combination of a minimum data rate and a maximum latency is requested and allocated. A specification of a radio communication protocol or a radio technology standard may define a plurality of predetermined combinations of minimum data rate values and maximum latency values. The combinations may cover a range from a practical non-availability to an ideal availability of the data rate and/or latency and may prefer either the data rate or the latency between the non-availability and the ideal availability. Predetermined combinations are easy to handle.

Advantageously, the complexity of the operational context is determined by operational context data being accessible to the vehicle. The operational context data may comprise data generated by the vehicle and data received by the vehicle. Generally speaking, the more operational context data has to be taken into account the more complex the operational context is. Of course, the complexity of the operational context also depends on a type of the operational context data wherein different types may be weighted differently according to a respective influence on the complexity.

In many embodiments the operational context data comprises sensor data provided by a sensor of the vehicle, navigational data provided by a navigation system of the vehicle, risk data related to a position of the vehicle provided by a risk database, traffic data provided by a traffic data server and/or navigational data of at least one further vehicle being located in an environment of the vehicle. The sensor may be an environmental sensor, i.e. a camera, a RADAR sensor, a LIDAR sensor, an ultrasonic sensor and the like, or an internal sensor, i.e. a brake sensor, a steering-angle sensor, a throttle sensor and the like. The navigational data may, for instance, comprise map data and trajectory data of the vehicle. The risk database may be provided by a stationary server or be stored in the vehicle. The risk data may be derived from an analysis of historic accident statistics. The traffic data may comprise traffic jam data, construction side data and the like. Of course, the traffic data may also be provided by the navigation system of the vehicle. The navigational data of the at least one further vehicle may be received by the vehicle over the air from the further vehicle. The environment shall be understood as a detection area of an environmental sensor or a union of such detection areas.

The sensor data may comprise a position, a velocity and/or an acceleration of at least one further vehicle being located in an environment of the vehicle and/or a number of further vehicles in an environment of the vehicle. The position may be received by a GPS antenna of the vehicle. The velocity and/or acceleration of the further vehicle and the number of the further vehicles may be detected by an environmental sensor of the vehicle.

It is preferred that the vehicle requests the radio access network to allocate the minimum data rate and/or the maximum latency whenever the complexity of the operational context changes. The requests of the vehicle are triggered by operational context changes. Due to the triggering the minimum data rate and/or the maximum latency is always adapted to an actual communication requirement.

In advantageous embodiments, the vehicle requests the minimum data rate to be the higher the more complex the operational context is and to be the lower the less complex the operational context is. The more complex the operational context is, the more data has to be exchanged. The less complex the operational context is the less data has to be exchanged.

Alternatively or additionally the vehicle may request the maximum latency to be the lower the more complex the operational context is and to be the higher the less complex the operational context is. The more complex the operational context is, the less latency is acceptable. The less complex the operational context is the more latency is acceptable.

In further embodiments the vehicle is operated having the wireless connection to a cellular communication network or a wireless local area network as the radio access network. The cellular communication network may support a standardized radio technology, i.e. LTE, 5G, previous and future radio technology standards and the like. The wireless local area network (W-LAN) may also be in conformity with the standard IEEE 802.11 family.

The method is preferably carried out for each vehicle within a range of an access node of the radio access network. Radio resources of the access node are allocated to the respective wireless connections appropriately, i.e. adequately, and demand-driven. Thereby, a safety of best effort vehicles within the range of the access node is increased, as wireless connections of the best effort vehicles may be configured as requested. A risk of an overload of the radio access node is low. The access node may comprise a base station of a cellular communication network, a W-LAN router of a wireless local area network and the like.

Particularly, the vehicles within the range of the access node may exchange data with each other very efficiently via an edge data center, i.e. both with a sufficient data rate and a tolerable latency, particularly high quality data in real time if needed. This type of communication is called a C2E2C (Car2Edge2Car) communication. A first vehicle may wirelessly send first data to the edge data center and a second vehicle may wirelessly send second data to the edge data center. The first vehicle may wirelessly receive third data from the edge data center and the second vehicle may wirelessly receive fourth data from the edge data center.

Correspondingly, the edge data center may wirelessly receive the first data from the first vehicle and the second data from the second vehicle, generate the third data and the fourth data and wirelessly send the third data to the first vehicle and the fourth data to the second vehicle. Generating the third data may comprise transforming the first data, transforming the second data and combining the transformed first data, the transformed second data and external data, i.e. enriching the first data, Generating the fourth data may comprise transforming the second data, transforming the first data and combining the transformed second data, the transformed first data and external data, i.e. enriching the second data.

The minimum data rate and/or the maximum latency may be allocated by the radio access network dependent on a radio condition within the range. The radio condition within the range may, for instance, be represented by a signal to interference plus noise ratio (SINR) or channel quality indicator (CQI). Bad radio conditions, i.e. low SINR values or low CQI values, may lower a capacity, i.e. available radio resources like a maximum data rate, of the radio access node as compared to a theoretically possible capacity in ideal radio conditions.

Another aspect of the invention is a computer program product according to claim 12.

The computing device may comprise a mobile user equipment device, i.e. an electronic control unit of a vehicle or a smartphone being carried by a pedestrian, which may be involved in a traffic situation, an access node of the radio access network, an edge data center of the radio access network and/or a further node of the radio access network. The computer readable storage medium may comprise a CD, a DVD, an USB stick, a memory stick and may be used for installing the program code in the computing device or immediately executing the program code.

According to the invention the computer program product is configured to carry out an inventive method. The program code may be completely executed on a single computing device. Alternatively or additionally, the program code may be partially executed on a plurality of different computing devices, respectively, i.e. an electronic control unit (ECU) of a vehicle, an access node and/or an edge data center of the radio access network.

An essential advantage of the inventive method is that available radio resources of the radio access network are adequately distributed among the wireless connections of vehicles. Due to the adequate distribution of the radio resources, functionalities of the vehicles being connected to the radio access network work safely and efficiently. An overload of the radio access network and/or an accident risk of the vehicles being connected to the radio access network is effectively avoided.

Further advantages and configurations of the invention become apparent from the following description and the enclosed drawings.

It shall be understood that the features described previously and to be described subsequently may be used not only in the indicated combinations but also in different combinations or on their own without leaving the scope of the present invention.

The invention is described in detail by means of an exemplary embodiment and with reference to the drawings.
- Fig. 1: schematically shows a structural diagram of a radio access network according to an embodiment of the invention;
- Fig. 2: schematically shows a top view of a plurality of vehicles being operated in a method according to an embodiment of the invention.

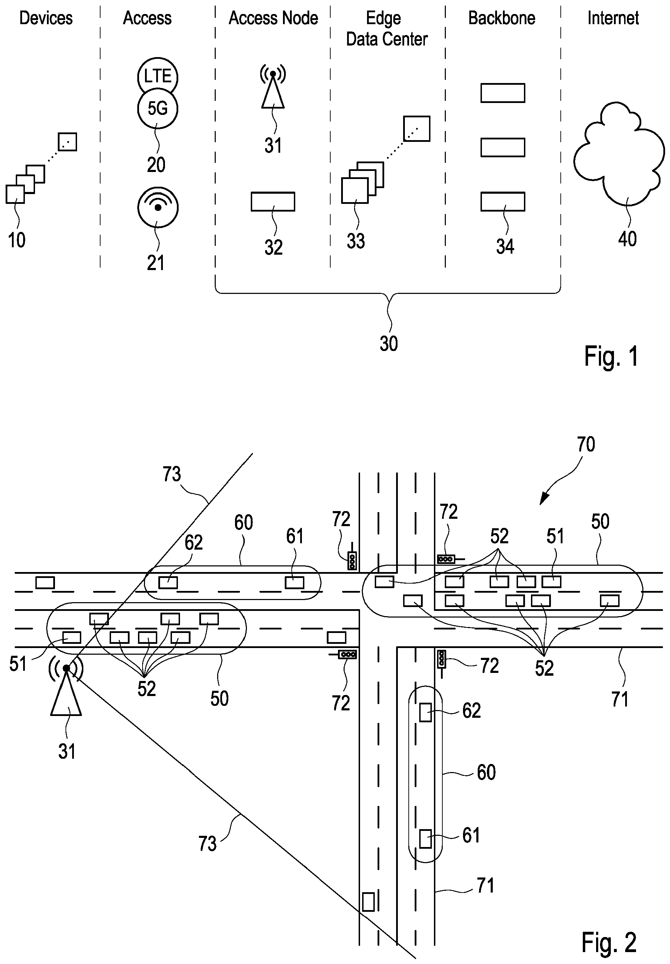

Fig. 1 schematically shows a structural diagram of a radio access network 30 according to an embodiment of the invention. The radio access network 30 comprises a plurality of nodes 31, 32 with the access node 31 being configured as a base station of a cellular communication network and the access node 32 being configured as a W-LAN router. Each access node 31, 32 supports corresponding wireless connections 20, 21, the wireless connection 20 being configured according to a standardized radio technology, i.e. LTE, 5G, a previous or a future radio technology standard and the wireless connection 21 being configured according to the standard IEEE 802.11 family.

Furthermore, the radio access network 30 comprises a plurality of edge data centers (MEC) 33 and a backbone having a plurality of stationary backbone nodes 34. The stationary backbone nodes 34 are not qualified in detail for avoiding any confusion as they are not essential for the invention. The random access network 30 provides wireless connections to a plurality of user equipment devices 10, the wireless connections allowing the user equipment devices 10 to access an internet 40 which is symbolized as a cloud.

The radio access network 30 and the user equipment device 10 comprise a program code of a computer program product according to the invention. The program code is executed by a processor of a user equipment device 10 and/or by a processor of a stationary network node of the radio access network 30.

Fig. 2 schematically shows a top view of a plurality of vehicles 51, 52, 61, 62 being operated in a method according to an embodiment of the invention. The vehicles 51, 52, 61, 62 are user equipment devices 10 as shown in fig. 1. Each vehicle 51, 52, 61, 62 comprises one or more environmental sensors, one or more internal sensors, a radio interface unit and an electronic control unit being connected to each environmental sensor, each internal sensor and the radio interface unit. These components of the vehicles 51, 52, 61, 62 are not shown for avoiding any confusion as they are well known.

The vehicles 51, 52, 61, 62 are involved in a traffic situation at a road intersection 70 of two roads 71 crossing each other and having traffic lights 72 as usual. The intersection 70 is completely within a range of an access node 31 of the radio access network 30, i.e. within a radio cell provided by a base station of the radio access network 30. The vehicles 51, 61 are operated having wireless connections 20 to the cellular communication network 31, 33, 34 as the radio access network 30. The illustrated traffic situation is exemplary and does not restrict the invention. Instead, the invention applies to any traffic situation involving two or more vehicles 51, 52, 61, 62.

The intersection 70 may alternatively be completely within a range of an access node 32 of the radio access network 30, i.e. within a W-LAN hot spot area provided by a W-LAN router of the radio access network 30. In this alternative embodiment the vehicles 51, 61 are operated having wireless connections 21 to the wireless local area network 32, 33, 34 as the radio access network 30.

The vehicles 51, 61 are operated using a wireless connection 20 to the radio access network 30. The vehicles 51, 61 request the radio access network 30 to allocate a minimum data rate and/or a maximum latency to the respective wireless connections 20.

The requested minimum data rate and/or the maximum latency matches a complexity of operational contexts 50, 60 of the vehicles 51, 61. The operational contexts 50, 60 of the vehicles 51, 61 comprise one or more further vehicles 52, 62.

Each vehicle 51, 61 requests the radio access network 30 to allocate the minimum data rate and/or the maximum latency whenever the complexity of the respective operational context 50, 60 changes. The vehicles 51, 61 request the minimum data rate to be the higher the more complex the respective operational context 50, 60 is and to be the lower the less complex the respective operational context 50, 60 is. The vehicles 51, 61 request the maximum latency to be the lower the more complex the respective operational context 50, 60 is and to be the higher the less complex the operational context 50, 60 is.

The complexity of the operational contexts 50, 60 is determined by respective operational context data being accessible to the vehicles 51, 61.

The operational context data comprises sensor data provided by one or more sensors of the vehicles 51, 61. The sensor data comprises a position, a velocity and/or an acceleration of the further vehicles 52, 62 being located in the respective environments of the vehicle 51, 61 and/or a number of further vehicles 52, 62 in the respective environments of the vehicle 51, 61.

In the illustrated example, the operational contexts 50 are more complex than the operational contexts 60, as the operational contexts 50 comprise a large number of further vehicles 51 while the operational contexts 60 comprise a single further vehicle 61 only.

The operational context data further comprises navigational data provided by navigation systems of the vehicles 51, 61, risk data related to a position of the vehicles 51, 61 provided by a risk database, traffic data provided by a traffic data server, the risk database and/or the traffic data server being part of the internet 40, and/or navigational data of at least one further vehicle 52, 62 being located in an environments of the vehicles 51, 61 are defined by unions of detection areas of the respective sensors.

The radio access network 30 allocates the requested minimum data rate and/or maximum latency to the wireless connections 20 of the vehicle 51, 61. The minimum data rate and/or the maximum latency is allocated by the radio access network 30 dependent on a radio condition within the range 73.

Preferably, a predetermined combination of a minimum data rate and a maximum latency is requested and allocated.

The method is simultaneously and equally carried out for the further vehicles 52, 62 within the range 73 of the access node 31 of the radio access network 30, the vehicles 51, 61 and the further vehicles 52, 62 swapping roles with respect to the method. As a result, the method is simultaneously and equally carried out for each vehicle 51, 52, 61, 62 within the range 73 of the access node 31 of the radio access network 30. The vehicles 51, 52, 61, 62 exchange data between each other via the radio access network 30 and the edge data centers 33 (C2E2C) very efficiently, i.e. high quality data in realtime if needed and low quality data with a delay if acceptable.

### Reference numerals

- 10: user equipment device

- 20: wireless connection
- 21: wireless connection

- 30: radio access network
- 31: access node
- 32: access node
- 33: edge data center
- 34: backbone

- 40: internet

- 50: operational context
- 51: vehicle
- 52: further vehicle

- 60: operational context
- 61: vehicle
- 62: further vehicle

- 70: road intersection
- 71: road
- 72: traffic light
- 73: range

## Claims

1. A method for operating a vehicle (51, 61), wherein
- a vehicle (51, 61) is operated using a wireless connection (20, 21) to a radio access network (30), wherein
- the vehicle (51, 61) determines a minimum data rate to be sufficiently high for a safe operation of the vehicle (51, 61) in an operational context of the vehicle (51, 61) and/or a maximum latency to be sufficiently low for the safe operation of the vehicle (51, 61) in the operational context of the vehicle (51, 61), the minimum data rate and/or the maximum latency matching a complexity of the operational context (50, 60) of the vehicle (51, 61);
- the vehicle (51, 61) requests the radio access network (30) to allocate the determined minimum data rate and/or maximum latency to the wireless connection (20, 21); and
- the radio access network (30) allocates the requested minimum data rate and/or maximum latency to the wireless connection (20, 21) of the vehicle (51, 61).

2. The method according to claim 1, wherein a predetermined combination of a minimum data rate and a maximum latency is requested and allocated.

3. The method according to one of claims 1 or 2, wherein the complexity of the operational context (50, 60) is determined by operational context data being accessible to the vehicle (51, 61).

4. The method according to one claim 3, wherein the operational context data comprises sensor data provided by a sensor of the vehicle (51, 61), navigational data provided by a navigation system of the vehicle (51, 61), risk data related to a position of the vehicle (51, 61) provided by a risk database, traffic data provided by a traffic data server and/or navigational data of at least one further vehicle (52, 62) being located in an environment of the vehicle (51, 61).

5. The method according to claim 4, wherein the sensor data comprises a position, a velocity and/or an acceleration of at least one further vehicle (52, 62) being located in an environment of the vehicle (51, 61) and/or a number of further vehicles (52, 62) in an environment of the vehicle (51, 61).

6. The method according to one of the preceding claims, wherein the vehicle (51, 61) requests the radio access network (30) to allocate the minimum data rate and/or the maximum latency whenever the complexity of the operational context (50, 60) changes.

7. The method according to one of the preceding claims, wherein the vehicle (51, 61) requests the minimum data rate to be the higher the more complex the operational context (50, 60) is and to be the lower the less complex the operational context (50, 60) is.

8. The method according to one of the preceding claims, wherein the vehicle (51, 61) requests the maximum latency to be the lower the more complex the operational context (50, 60) is and to be the higher the less complex the operational context (50, 60) is.

9. The method according to one of the preceding claims, wherein the vehicle (51, 61) is operated having the wireless connection (20, 21) to a cellular communication network (31, 33, 34) or a wireless local area network (32, 33, 34) as the radio access network (30).

10. The method according to one of the preceding claims, being carried out for each vehicle (51, 61, 52, 62) within a range (73) of an access node (31, 32) of the radio access network (30).

11. The method according to claim 10, wherein the minimum data rate and/or the maximum latency is allocated by the radio access network (30) dependent on a radio condition within the range (73).

12. A computer program product for operating a vehicle (51, 61), comprising a computer readable storage medium storing a program code, the program code being executable by a computing device and causing the computing device to carry out a method according to one of claims 1 to 11 when being executed by a processor of the computing device.

## Patentansprüche

1. Verfahren zum Betrieb eines Fahrzeugs (51, 61), bei dem
- ein Fahrzeug (51, 61) über eine drahtlose Verbindung (20, 21) zu einem Funkzugangsnetz (30) betrieben wird, wobei
- das Fahrzeug (51, 61) eine minimale Datenrate, die für einen sicheren Betrieb des Fahrzeugs (51, 61) in einem Betriebskontext des Fahrzeugs (51, 61) ausreichend hoch ist, und/oder eine maximale Latenzzeit, die für den sicheren Betrieb des Fahrzeugs (51, 61) in dem Betriebskontext des Fahrzeugs (51, 61) ausreichend niedrig ist, bestimmt, wobei die minimale Datenrate und/oder die maximale Latenzzeit einer Komplexität des Betriebskontexts (50, 60) des Fahrzeugs (51, 61) entspricht;
- das Fahrzeug (51, 61) das Funkzugangsnetz (30) auffordert, der drahtlosen Verbindung (20, 21) die bestimmte minimale Datenrate und/oder maximale Latenzzeit zuzuweisen; und
- das Funkzugangsnetz (30) der drahtlosen Verbindung (20, 21) des Fahrzeugs (51, 61) die angeforderte minimale Datenrate und/oder maximale Latenzzeit zuweist.

2. Verfahren nach Anspruch 1, wobei eine vorbestimmte Kombination aus einer minimalen Datenrate und einer maximalen Latenzzeit angefordert und zugewiesen wird.

3. Verfahren nach einem der Ansprüche 1 oder 2, wobei die Komplexität des Betriebskontextes (50, 60) durch Betriebskontextdaten bestimmt wird, die für das Fahrzeug (51, 61) zugänglich sind.

4. Verfahren nach Anspruch 3, wobei die Betriebskontextdaten Sensordaten, die von einem Sensor des Fahrzeugs (51, 61) bereitgestellt werden, Navigationsdaten, die von einem Navigationssystem des Fahrzeugs (51, 61) bereitgestellt werden, Risikodaten in Bezug auf eine Position des Fahrzeugs (51, 61), die von einer Risikodatenbank bereitgestellt werden, Verkehrsdaten, die von einem Verkehrsdatenserver bereitgestellt werden, und/oder Navigationsdaten mindestens eines weiteren Fahrzeugs (52, 62), das sich in einer Umgebung des Fahrzeugs (51, 61) befindet, umfassen.

5. Verfahren nach Anspruch 4, wobei die Sensordaten eine Position, eine Geschwindigkeit und/oder eine Beschleunigung von mindestens einem weiteren Fahrzeug (52, 62), das sich in einer Umgebung des Fahrzeugs (51, 61) befindet, und/oder eine Anzahl weiterer Fahrzeuge (52, 62) in einer Umgebung des Fahrzeugs (51, 61) umfassen.

6. Verfahren nach einem der vorhergehenden Ansprüche, wobei das Fahrzeug (51, 61) das Funkzugangsnetz (30) immer dann auffordert, die minimale Datenrate und/oder die maximale Latenzzeit zuzuweisen, wenn sich die Komplexität des Betriebskontexts (50, 60) ändert.

7. Verfahren nach einem der vorhergehenden Ansprüche, wobei das Fahrzeug (51, 61) die minimale Datenrate umso höher anfordert, je komplexer der Betriebskontext (50, 60) ist, und umso niedriger, je weniger komplex der Betriebskontext (50, 60) ist.

8. Verfahren nach einem der vorhergehenden Ansprüche, wobei das Fahrzeug (51, 61) die maximale Latenzzeit umso niedriger anfordert, je komplexer der Betriebskontext (50, 60) ist, und umso höher, je weniger komplex der Betriebskontext (50, 60) ist.

9. Verfahren nach einem der vorhergehenden Ansprüche, wobei das Fahrzeug (51, 61) mit der drahtlosen Verbindung (20, 21) zu einem zellularen Kommunikationsnetz (31, 33, 34) oder einem drahtlosen lokalen Netz (32, 33, 34) als Funkzugangsnetz (30) betrieben wird.

10. Verfahren nach einem der vorhergehenden Ansprüche, das für jedes Fahrzeug (51, 61, 52, 62) innerhalb einer Reichweite (73) eines Zugangsknotens (31, 32) des Funkzugangsnetzes (30) durchgeführt wird.

11. Verfahren nach Anspruch 10, wobei die minimale Datenrate und/oder die maximale Latenzzeit durch das Funkzugangsnetz (30) abhängig von einer Funkbedingung innerhalb der Reichweite (73) zugewiesen wird.

12. Computerprogrammprodukt zum Betrieb eines Fahrzeugs (51, 61), das ein computerlesbares Speichermedium umfasst, welches einen Programmcode speichert, wobei der Programmcode von einer Rechenvorrichtung ausgeführt werden kann und die Rechenvorrichtung veranlasst, ein Verfahren nach einem der Ansprüche 1 bis 11 durchzuführen, wenn es von einem Prozessor der Rechenvorrichtung ausgeführt wird.

## Revendications

1. Procédé pour faire fonctionner un véhicule (51, 61),
- un véhicule (51, 61) fonctionnant à l'aide d'une connexion sans fil (20, 21) à un réseau d'accès radio (30),
- le véhicule (51, 61) déterminant un débit de données minimal devant être suffisamment élevé pour un fonctionnement en toute sécurité du véhicule (51, 61) dans un contexte de fonctionnement du véhicule (51, 61) et/ou une latence maximale devant être suffisamment faible pour le fonctionnement en toute sécurité du véhicule (51, 61) dans le contexte de fonctionnement du véhicule (51, 61), le débit de données minimal et/ou la latence maximale correspondant à une complexité du contexte de fonctionnement (50, 60) du véhicule (51, 61);
- le véhicule (51, 61) demandant au réseau d'accès radio (30) d'allouer à la connexion sans fil (20, 21) le débit de données minimal et/oula latence maximale déterminés; et
- le réseau d'accès radio (30) allouant à la connexion sans fil (20, 21) du véhicule (51,61) le débit de données minimal et/ou la latence maximale demandés.

2. Procédé selon la revendication 1, une combinaison prédéterminée d'un débit de données minimal et d'une latence maximale étant demandée et allouée.

3. Procédé selon la revendication 1 ou 2, la complexité du contexte de fonctionnement (50, 60) étant déterminée par des données du contexte de fonctionnement accessibles au véhicule (51,61).

4. Procédé selon la revendication 3, les données de contexte de fonctionnement comprenant des données de capteur fournies par un capteur du véhicule (51, 61), des données de navigation fournies par un système de navigation du véhicule (51, 61), des données de risque relatives à une position du véhicule (51, 61) fournies par une base de données de risque, des données de trafic fournies par un serveur de données de trafic et/ou des données de navigation d'au moins un autre véhicule (52, 62) se trouvant dans un environnement du véhicule (51, 61).

5. Procédé selon la revendication 4, les données de capteur comprenant une position, une vitesse et/ou une accélération d'au moins un autre véhicule (52, 62) se trouvant dans un environnement du véhicule (51, 61) et/ou un nombre d'autres véhicules (52, 62) dans un environnement du véhicule (51, 61).

6. Procédé selon l'une des revendications précédentes, le véhicule (51, 61) demandant au réseau d'accès radio (30) d'allouer le débit de données minimal et/ou la latence maximale chaque fois que la complexité du contexte de fonctionnement (50, 60) change.

7. Procédé selon l'une des revendications précédentes, le véhicule (51, 61) demandant que le débit minimal de données soit d'autant plus élevé que le contexte de fonctionnement (50, 60) est complexe et d'autant plus faible que le contexte de fonctionnement (50, 60) est moins complexe.

8. Procédé selon l'une des revendications précédentes, le véhicule (51, 61) demandant que la latence maximale soit d'autant plus faible que le contexte de fonctionnement (50, 60) est complexe et d'autant plus élevé que le contexte de fonctionnement (50, 60) est moins complexe.

9. Procédé selon l'une des revendications précédentes, le véhicule (51, 61) fonctionne en ayant la connexion sans fil (20, 21) à un réseau de communication cellulaire (31, 33, 34) ou à un réseau local sans fil (32, 33, 34) comme réseau d'accès radio (30).

10. Procédé selon l'une des revendications précédentes, le procédé étant mis en œuvre pour chaque véhicule (51, 61, 52, 62) dans une portée (73) d'un nœud d'accès (31, 32) du réseau d'accès radio (30).

11. Procédé selon la revendication 10, le débit de données minimal et/ou la latence maximale étant alloué par le réseau d'accès radio (30) en fonction d'une condition radio dans la portée (73).

12. Produit de programme informatique pour faire fonctionner un véhicule (51, 61), comprenant un support de stockage lisible par ordinateur stockant un code de programme, le code de programme étant exécutable par un dispositif informatique et provocant le dispositif informatique à exécuter un procédé selon l'une des revendications 1 à 11 lorsqu'il est exécuté par un processeur du dispositif informatique.
